# EUROPEAN PATENT APPLICATION

(11) **EP 1 380 942 A2**
(43) Date of publication of application: **14.01.2004**
(21) Application number: 03254391.0
(22) Date of filing: 11.07.2003
(51) Int. Cl.: G06F 9/44

(54) **Method and system for providing flexible time-based control of application appearance and behaviour**

(30) Priority: 12.07.2002 US 395655 P
(71) Applicant: Ensequence, Inc., Portland, OR 97204 (US)
(72) Inventor: Wallace, Michael W., Vancouver, WA 98683 (US); Westerman, Larry A., Portland, OR 97210 (US)
(74) Representative: Roberts, Mark Peter

(57) **Abstract**

A method, a computer readable medium, and a system are provided for controlling computer system operation during execution of the computer system. At least one attribute change of a computer system to occur during the execution of the computer system is identified. The attribute change is associated with a state change in the computer system such that indication of the state change triggers the attribute change. An index point is identified at which point the state change is to occur. The state change is associated with the index point, and when the index point is reached during the course of computer system execution, the attribute change is triggered automatically upon the index point being reached. The method, computer readable medium, and system can be used for controlling computer system execution in a broadcast environment or used to emulate computer system execution.

## Description

This patent application is related to concurrently-filed patent applications entitled "METHOD AND SYSTEM FOR AUTOMATIC CONTROL OF GRAPHICAL COMPUTER APPLICATION APPEARANCE AND EXECUTION," bearing attorney docket number N.89068, "METHOD AND SYSTEM FOR FLEXIBLE TIME-BASED CONTROL OF APPEARANCE AND BEHAVIOR OF SOFTWARE APPLICATION," bearing attorney docket number N.89070, and "METHOD AND SYSTEM FOR GENERATING FLEXIBLE TIME-BASED CONTROL OF APPLICATION APPEARANCE AND BEHAVIOR," bearing attorney docket number N. 89072, all of which are incorporated by reference.

This invention relates generally to computer systems and software applications therefor and, more specifically, to timing, control, and execution of software applications.

The improved price-performance of digital technology has made possible the advent of digital media broadcasting. The reduced cost of microprocessors, digital memory, and related devices has made it possible to place computers in set-top boxes (STBs) and related devices to receive digital cable or digital satellite television signals and decode those signals into audio-visual programs.

The advent of digital television broadcasting and the proliferation of STBs also makes it possible to enhance viewers' television experiences. In addition to transmitting video and audio data, digital media broadcasting allows additional data to be transmitted to the STBs with which users can interact. By analogy, users can interact through an STB with data transmitted via the digital media broadcast the way a computer user can interact with data available over the Internet. For example, digital television subscribers are already acquainted with an electronic program guide (EPG) function which enables users to select and tune to particular programs and/or read about the programs being shown at present or at later points in time.

The EPG is a rudimentary example of an interactive television application exploiting the capability of the digital broadcast medium to transmit additional content and for the STB to execute this additional content. The computer functionality of STBs also makes other interactive television applications possible. With appropriately configured STBs, users potentially can play along with game shows, take tests in on-line distance learning courses, bid in on-line auctions, and otherwise actively engage the content being broadcast. STBs thus allow users to have highly interactive television experiences.

One type of additional content application which is desirable in such a broadcast environment is one which provides functionality synchronized with video or audio content on a broadcast channel. In the examples of interactive game shows, on-line distance learning testing, and on-line auctions, it would be highly desirable to provide application-specific behaviors in an STB which are correlated to associated video and audio streams being broadcast. Providing application-specific behaviors in the STB and correlating the application-specific behaviors with video and audio streams presents a number of concerns. These concerns, and conventional responses to these concerns are described in detail in the co-pending patent applications incorporated by reference. Nonetheless, at least two of these concerns merit repeating.

First, providing application specific behaviors to STBs conventionally involves transmitting application-specific program code to the STBs. The transmission would be carried through the digital broadcast medium, just as video and audio data are transmitted. Downloading such applications involves transmitting potentially many data packets, comprising vast numbers of data blocks, for each application. A concern arises because video and audio data for the numerous channels being transmitted leaves little bandwidth for other data. Thus, it may be difficult to procure the bandwidth necessary to transmit large bodies of application specific programming to support desired behaviors in STBs. Moreover, STBs may have relatively little random access memory (RAM) in which to store significant applications.

Second, synchronizing behaviors of the application specific programming with a series of events in the video and audio data can be difficult. Applications of this type conventionally use asynchronous trigger signals embedded in the broadcast signal. These asynchronous trigger signals can be difficult to deliver accurately when data blocks carrying such triggers must be multiplexed with so much other video and audio data transmitted in the medium. Further, these time-dependencies present particular concerns when a user engages a program already in progress and may have missed a timing synchronization event at the outset of the program. Correlating the application-specific programming with the video and audio stream may be troublesome, if even possible.

Developers of interactive programming or other programs for which it is desired to transmit additional content to go along with video and audio data are suitably concerned with how to provide and correlate timing of such content. It is highly desirable to develop support in STBs to reduce data transmission needs and to allow for correlation of application behaviors. Correspondingly, it is highly desirable for developers to be able to test and modify applications to ensure that they will operate appropriately in the STB environment, and that the timing of events in such applications is appropriate. Similarly, it is highly desirable to be able to emulate program execution to monitor memory usage and other attributes of the applications to make sure that the applications will run properly on STBs. It is important that developers be able to review important portions of applications, and be able to make desired modifications.

Thus, there are unmet needs in the art for facilitating efficient transfer of data in a broadcast environment that allows for accurately synchronized behavior by an application, as well as for testing, monitoring, and modifying such applications prior to transmission to ensure desired execution by users.

Embodiments of the present invention enable provide support for controlling program appearance and behavior during execution of a computer system. Behavioral attribute changes are correlated with state changes which are associated with a list of triggering events which initiate the behavioral changes. As a result, applications can be generated with provision of data in the form of collections of state changes and event lists without having to generate or provide custom application code.

More specifically, embodiments of the present invention provide a method, a computer readable medium, and a data system for controlling computer system operation during execution of the computer system. Using embodiments of the present invention, at least one attribute change of a computer system to occur during execution of the computer system is identified. The attribute change is associated with a state change occurring in the computer system such that the state change initiates the attribute change. Index points are identified in the execution of the computer system indicative of when the state change is to occur. These index points are associated with appropriate state changes. Upon execution of the computer system, reaching events associated with the index points triggers the associated state changes and, thus, the associated attributes are changed automatically upon reaching the appropriate index points.

Embodiments of the present invention suitably operate in a broadcast environment where execution of the computer system is correlated with a media program, and the media program and data concerning attribute changes and index points are broadcast via digital transmission. Embodiments of the present invention also suitably operate in an emulation environment where the media program and data concerning attribute changes and index points are loaded into an emulator where their presentation can be tested, monitored, and revised if necessary.

In accordance with further aspects of the invention, the index points are collected into index tables, and the state changes are collected in state tables. The index table and the associated state table can be modified, updated, and/or transmitted independently of one another, and can be separately or sequentially loaded from a data stream containing the index table and the state table. The index table and state, table can be received from a broadcast network and viewed at that time or stored for later execution. The index table and state table also can be stored directly on a system and executed in an emulation environment to monitor application behaviors according to an emulated passage of time. The emulated passage of time can be modified to scrutinize resulting behaviors to allow for monitoring of application parameters, and to allow for modification of the index table and state table to adjust application behaviors.

The preferred and alternative embodiments of the present invention are described in detail below, by way of example, with reference to the following drawings, in which:-
FIGURE 1 shows a timeline of event triggers driving an index table and a state table for controlling an interactive software application according to an embodiment of the present invention;
FIGURE 2 is a flowchart of a routine for executing state changes and index points in an index table according to an embodiment of the present invention;
FIGURE 3 is a flowchart of a routine for emulating state changes and index points in an index table according to an embodiment of the present invention;
FIGURE 4 is a is a set of windows for reviewing and revising attribute changes and index points;
FIGURE 5 is a block diagram of an environment for creating, disseminating and using applications using an embodiment of the present invention;
FIGURE 6 is a block diagram of an interpreter executing an application using state changes and index points in accordance with an embodiment of the present invention; and
FIGURE 7 is a block diagram of a data processing/media control system for executing or emulating applications according to an embodiment of the present invention.

By way of overview, embodiments of the present invention provide a method, a computer readable medium, and a data system for controlling computer system operation during execution of the computer system. Using embodiments of the present invention, at least one attribute change of a computer system to occur during execution of the computer system is identified. The attribute change is associated with a state change occurring in the computer system such that the state change initiates the attribute change. Index points are identified in the execution of the computer system indicative of when the state change is to occur. These index points are associated with appropriate state changes. Upon execution of the computer system, reaching events associated with the index points triggers the associated state changes and, thus, the associated attributes are changed automatically upon reaching the appropriate index points. Embodiments of the present invention suitably operate in a broadcast environment where execution of the computer system is correlated with a media program, and the media program and data concerning attribute changes and index points are broadcast via digital transmission. Embodiments of the present invention also suitably operate in an emulation environment where the media program and data concerning attribute changes and index points are loaded into an emulator where their presentation can be tested, monitored, and revised if necessary.

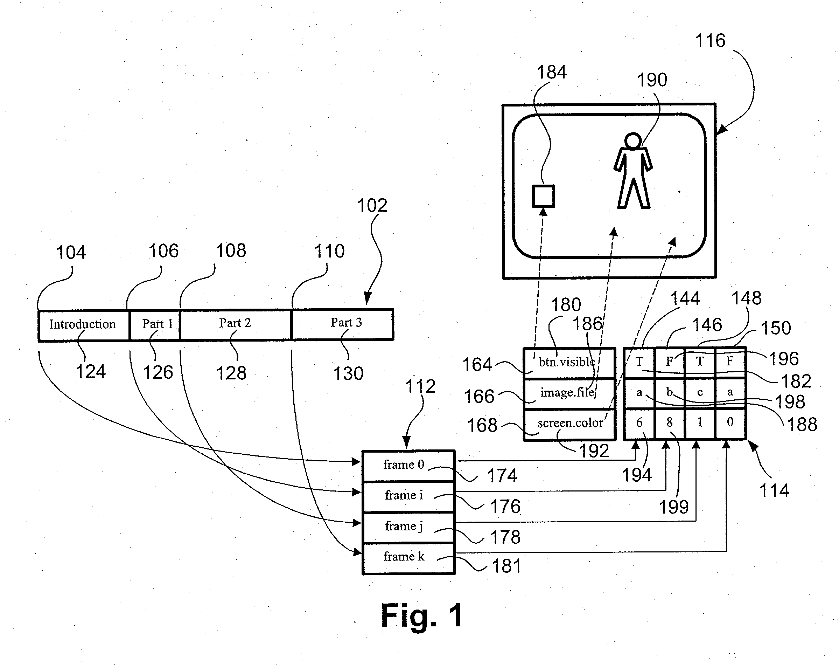

FIGURE 1 shows exemplary interaction between a video timeline 102. for a program with identified events 104, 106, 108, and 110, an index table 112, a plurality of state changes collected in a state table 114, and a program display 116 in one embodiment of the invention that is given by way of a non-limiting example. The operation of the state changes stored in the state table 114, the operation of the index points contained in the index table 112, and a facility for generating such control information as manifested in the tables 112 and 114 are further described in the concurrently-filed, co-pending patent applications entitled "METHOD AND SYSTEM FOR AUTOMATIC CONTROL OF GRAPHICAL COMPUTER APPLICATION APPEARANCE AND EXECUTION," bearing attorney docket number N.89068, "METHOD AND SYSTEM FOR FLEXIBLE TIME-BASED CONTROL OF APPEARANCE AND BEHAVIOR OF SOFTWARE APPLICATION," bearing attorney docket number N.89070, and "METHOD AND SYSTEM FOR GENERATING FLEXIBLE TIME-BASED CONTROL OF APPLICATION APPEARANCE AND BEHAVIOR," bearing attorney docket number N.89072, respectively, the contents of which are hereby incorporated by reference.

The video timeline 102 depicts four sequences in the program, including an introduction 124, Part 1 126, Part 2 128, and Part 3 130. The beginnings of these sequences 124, 126, 128, and 130 are identified as events 104, 106, 108, and 110, respectively, to be used in correlating presentation of additional content. The events 104, 106, 108, and 110 are thus associated with index points 174, 176, 178, and 181 and collected in the index table 112 in sequential order. In turn, each of the index points 174, 176, 178, and 181 are associated with a state 144, 146, 148, and 150, respectively, in the state table 114. The state table 114 also lists three program attributes 164, 166, and 168 which control appearance and behavior of the program as shown on the program display 116. As a result, as the video timeline 102 progresses with presentation of the program, each of the events 104, 106, 108, and 110 are reached. Reaching each of these events 104, 106, 108, and 110 triggers index points 174, 176, 178, and 181, respectively, in the index table 112. Reaching index points 174, 176, 178, and 181 in the index table 112 triggers state changes to states 144, 146, 148, and 150, respectively, thereby potentially changing each of the program attributes appearing on the program display 116.

More specifically, as represented on the video timeline 102, the program commences at a beginning associated with event 104. The event 104, which occurs at "frame 0" at the beginning of the program, is associated with index point 174 and state 144, which is a first state in the state table 114. At the state 144, a program attribute "btn.visible" 180 is set to "T" 182 for true, thereby making a button 184 appear on the program display 116. A program attribute "image.file" 186 is set to "a" 188, thereby making an associated image 190 appear on the program display. A program attribute "screen.color" 192 is set to "6" 194, changing a color of a background on the program display 116.

The program continues to progress according to the video timeline 102 and reaches the event 106 which occurs at "frame i" at the beginning of a next segment of the program. The event 106 occurs at "frame i" and is associated with index point 176 and state 146. Thus, upon reaching event 106, index point 176 automatically triggers the state change to state 146. At the state 146, the program attribute "btn.visible" 180 is set to "F" 196 for false, thereby making the button 184 disappear from the program display 116. The program attribute "image.file" 186 is set to "b" 198, making an associated image (not shown) appear on the program display in the place of image 190. The program attribute "screen.color" 192 is set to "8" 199, again changing a color of a background on the program display. Similarly, as the events 108 at "frame j" and 110 at "frame k" are reached, index points 178 and 181, respectively, trigger state changes in the state table 114 to the states 148 and 150, respectively, thereby changing the appearance and behavior of the program as evidenced by the appearance of the display screen 116. In sum, when events logged as index points are reached during execution of the program, states changes associated with the index points are triggered, initiating associated attribute changes.

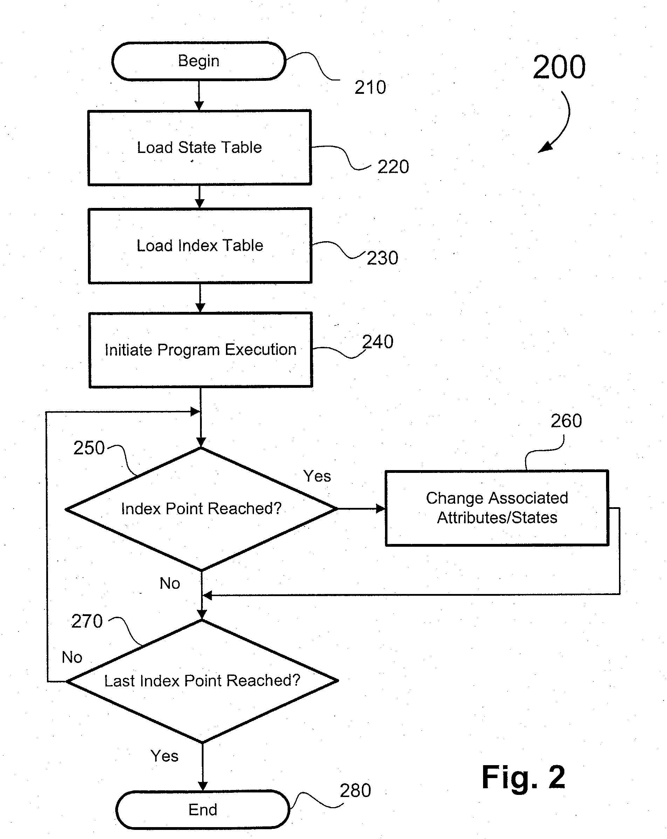

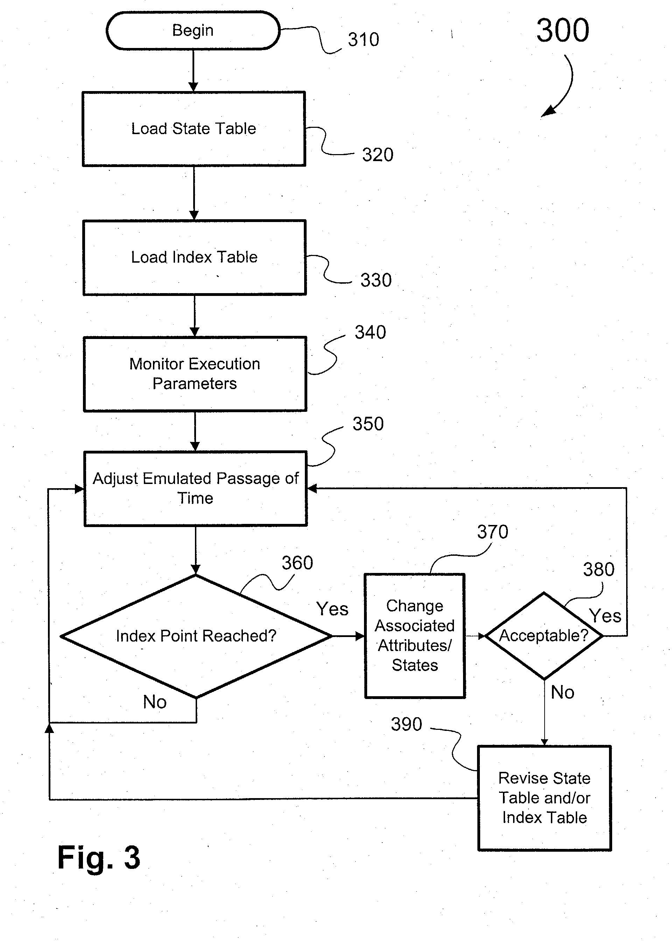

It will be appreciated that execution of an application as described by the non-limiting example advantageously can be performed upon actual execution of the application at a viewer/user location or in emulating the execution of the application prior to dissemination of the application. In the former case, the application might be executed by a STB which first loads the state change and index point information, then executes the state changes according to the index points. In the latter case, the application might be executed on a computer emulating the STB environment by loading the state change and index point information and allowing program developers or editors to monitor how the application will execute in a view/user environment. FIGURES 2 and 3 show routines for how such execution and emulation, respectively, can be performed according to embodiments of the present invention.

FIGURE 2 shows a flowchart of a routine 200 for executing an application implemented using a series of state changes and index points collected in a state table and an index table, respectively. In this non-limiting example, the routine can be conceived as executing in a STB suitably coupled with a television or other monitoring equipment. The routine commences at a block 210. At a block 220, a state table is loaded, the state table listing the state changes which define the behaviors of the application. At a block 230, an index table is loaded. The index table lists the index points which trigger state changes listed in the state table. It will be appreciated that either the loading of the state table at the block 220 or the loading of the index table at the block 230 may be performed first. In addition, if either a current state table or a current index table is already resident in the STB, only that table which was not previously loaded is loaded in the routine. Thus, if current versions of both tables already are loaded in the STB, neither need be loaded again. It will be appreciated, therefore, that if one of the tables is updated or revised, only the revised table would have to be received. Accordingly, only the revised table would have to be transmitted, thereby saving on bandwidth.

It will also be appreciated that, while the attribute changes are correlated into state changes and collected in a state table, information determining the attribute changes also could be collected in object-specific lists and other forms. Similarly, while index points have been collected into index tables for purposes of this non-limiting example, index points also could be collected into index lists or presented in other ways. For clarity and brevity of explanation, the term state table is used to refer to a collection of state change/attribute change data, and the term index table is used to refer to a collection of index point data.

Once the state table and index table have been loaded, program sequence execution is initiated at a block 240. If the viewer or user has engaged the program at the time of program broadcast, initiation of the program sequence at the block 240 could be triggered at a broadcast site. Alternatively, if the viewer or user later engages the program time from a recording device, that same program initiation signal embedded in the broadcast suitably initiates program execution upon replaying of the broadcast. In any case, initiation of program execution then begins a passage of time or a sequence of events which correspond with the index points received in the index table, thereby facilitating program execution.

As the program executes, video and/or audio information is decoded and presented to the user, along with any continuous content stored in the data included with the program. When an index point is reached at a decision block 250, associated state or attribute changes are made at a block 260. Again, the operations of state tables and index points are further described in the concurrently-filed, co-pending patent applications entitled "METHOD AND SYSTEM FOR AUTOMATIC CONTROL OF GRAPHICAL COMPUTER APPLICATION APPEARANCE AND EXECUTION," bearing attorney docket number N.89068, and "METHOD AND SYSTEM FOR FLEXIBLE TIME-BASED CONTROL OF APPEARANCE AND BEHAVIOR OF SOFTWARE APPLICATION," bearing attorney docket number N.89070, respectively, the contents of which are hereby incorporated by reference. If index points are not being reached at the decision block 250, the routine checks to see if the last index point has been reached at a decision block 270. If not, the routine loops to the decision block 250 until an index point is reached at the decision block 250 or a last index point is reached at the decision block 270. If a last index point is reached at the decision block 270, the application ends at a block 280.

FIGURE 3 is a flowchart of a routine 300 for emulating execution of the application. The routine 300 commences at a block 310 and, like the routine 200 (FIGURE 2) starts by loading a state table at a block 320 and loading an index table at a block 330. It will be appreciated that loading of either table could proceed first. It will also be appreciated that, in an emulator environment, the tables likely will be loaded from a local storage device rather than received from a broadcast medium. For a non-limiting example, the routine 300 suitably is executed on a computer on which the state table and index table have been stored on a hard disk or other recording medium. The computer suitably may be the same device on which the application and tables previously have been created.

Once the tables are loaded, at a block 340, execution parameters are monitored. These parameters suitably include utilization of memory or other resources, execution time and other-time related information, or other parameters. Allowing an operator to monitor these parameters allows the operator to further ensure proper run-time behavior once the application is broadcast.

At a block 350, the operator controls an emulated passage of time. At the block 350, the operator can let the application execute according to an ordinary timing sequence that might be expected in a broadcast environment. Alternatively, the operator can execute the application in slow motion at a slower execution rate than would normally be expected. Alternatively, the operator can execute the application one time unit or frame at a time. Alternatively, the operator can execute the application more rapidly than would be expected in a broadcast situation. Also, the operator can move backward as well as forward through application execution to review to his or her satisfaction operation of the application.

As the passage of time is emulated, at a decision block 360 it is determined if an index point has been reached. Once an index point has been reached, at a block 370 the associated behavioral changes, including state changes, are executed. At a decision block 380, the operator determines whether the behavioral changes resulting from the interaction of the state changes in the state table, the index points in the index table, and the emulated passage of time yield an acceptable result. If the result is acceptable, the operator continues with the control of the emulated passage of time at the block 350 to further emulate the application. If the result is not acceptable, at a decision block 380, the operator can revise the state changes in the state table or the index points in the index table to modify the execution of the application. After making such modifications, the routine resumes with the operator's control of the emulated passage of time at the block 350 to further emulate application execution. In this way, the operator can execute an aspect of the application that was just revised to determine if the revisions are acceptable. The operator can continue with the emulated control of time at the block 350 indefinitely, or the operator can choose to terminate emulation of the application at any time (not shown).

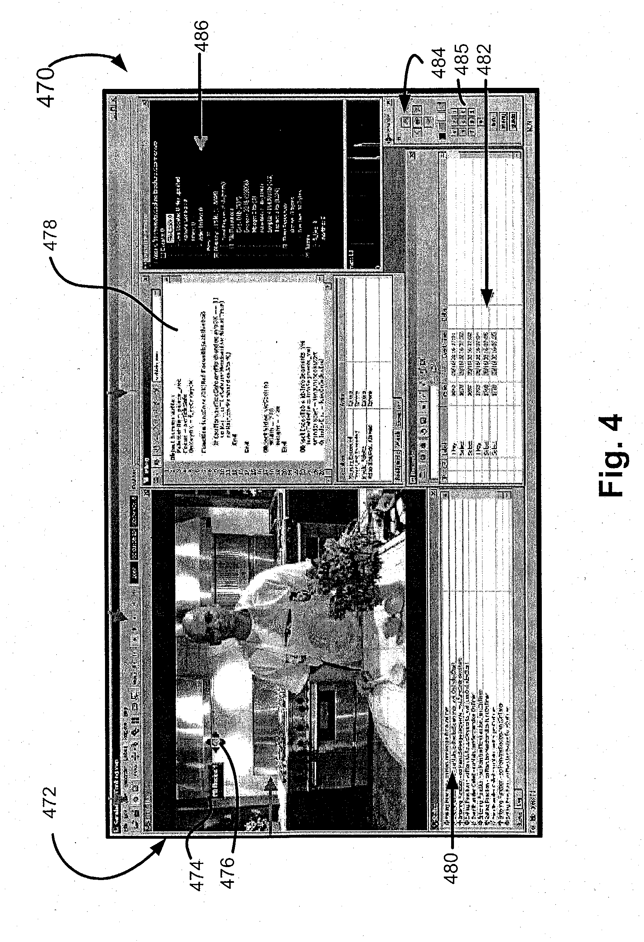

FIGURE 4 shows an exemplary embodiment of a monitoring environment 470 in which the routine of FIGURE 3 suitably is implemented for emulating execution of the application. The emulating environment includes a viewing window 472 for showing the program including attribute changes 474 generated. An application icon 476 is situated on the screen to signal to a viewer that the object on the screen marked by the application icon 476 is of interest to him or her. An application icon 476 can be used, for example, to signal a viewer interaction opportunity, such as the user having a chance to purchase the item marked with the application icon 476 through the use of his or her keyboard or remote control. An application window allows 478 allows for text- and command-drive manipulation of code associated with the attribute changes, if the developer desires to make changes beyond or in addition to those that can be made through manipulation of the tables. A status window 480 textually presents a list of functions being executed to present the attribute changes shown so that the developer can monitor what is causing the attributes shown on the screen.

For testing interactive programs, a recording window 482 and a remote window 484 are provided. The developer can simulate how a viewer or user of an interactive program might interact with a STB or other device to engage the program. For example, if a program such as a cooking show offers opportunities to purchase merchandise, the developer can click on a screen button 485 to simulate a user making a choice on a keypad. As a result, this allows the developer to determine how well interactive attribute changes he or she created will function. Similarly, the recording window 482 records actions of the simulated user to allow the interactive program to be played back to review how well the interactive functionality operated. A resource monitoring window 486 also allows the developer to monitor system resource usage, such as memory usage, to determine whether the program meets practical constraints and objectives.

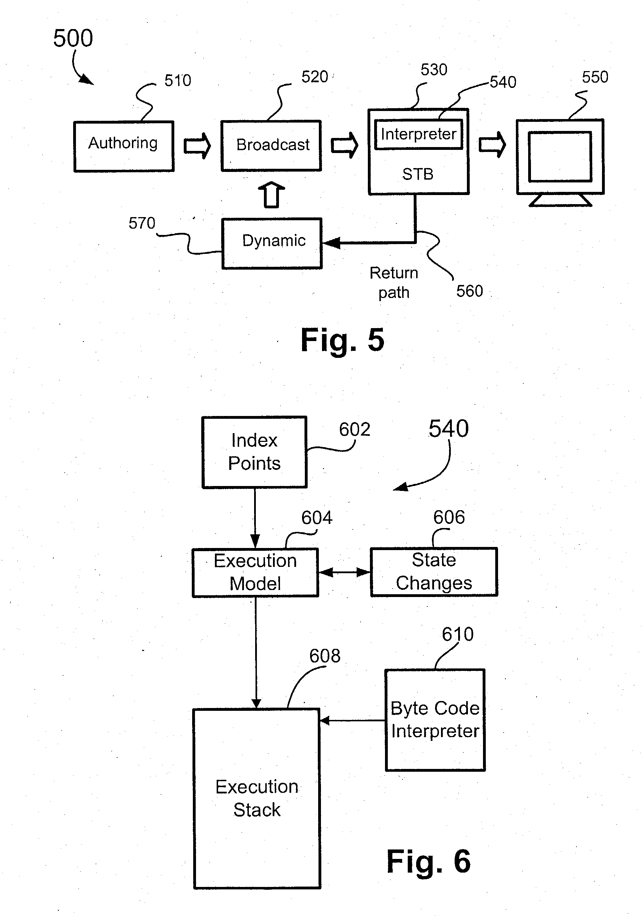

FIGURE 5 shows a block diagram of an exemplary system embodiment of the present invention in a production and broadcast environment. Applications are created in an authoring environment 510. Suitably, the applications are emulated there according to the routine 300 (FIGURE 3) to determine if they will execute satisfactorily in a broadcast environment. Once the application has been satisfactorily authored in the authoring environment 510, the application is disseminated in a broadcast environment 520. As previously described, digital applications can be transmitted via digital cable transmission, digital satellite transmission, or also may be transmitted via the Internet or other means. The application, including the state changes and the index points (not shown) are received at an STB 530 where they are processed by an interpreter 540 executing in the STB 530. The interpreter 540 receives and processes the state changes and index points, such as in the manner described in the routine 200 (FIGURE 2). The output of the interpreter 540 is presented to a user or viewer via a monitor 550, which suitably is a television, an audiovisual monitor, a computer, or another device equipped to process the application.

As previously described, interaction with an application is possible through the interpreter 540 and the STB 530. Applications suitably allow for interaction not only at the STB 530 level, but also at a broadcast site level, as in the examples of on-line testing, on-line auctions, and similar applications. in such cases, a return path 560 allows for user/viewer input back to the broadcast site which can be incorporated by a dynamic transmission processor 570 responsive to user/viewer input. For example, if the application invites viewers to take place in an on-line poll, votes gathered by the interpreter 540 can be transmitted via the STB 530 over the return path 560 to the dynamic transmission processor 570 where the poll can be tallied. Results can be relayed via a live host or, if the audiovisual portion of the program is prerecorded, the results could be encoded as data and processed by the interpreter 540 in the STB 530 to be presented to the user. It will be appreciated that the return path 560 for digital STBs suitably is a phone line through which users order pay-per-view movies and through which other transactions are processed. The return path 560 could be a phone line, a return band through the digital broadcast medium, or another implementation.

It will be appreciated that the application could be emulated by a system capable to mimic the functions of the STB 530 and the interpreter 540. In an emulation environment, the application would not be broadcast, but instead it would be loaded from a local medium and executed. Functions of the dynamic processor 570 in response to user actions could be simulated locally as well.

FIGURE 6 shows a block diagram of one presently preferred embodiment of the interpreter 540. The interpreter 540 processes index points 602 and state changes collected in a state table 606 via an execution model 604. The execution model 604 contains standard function calls to interpret functions invoked in the state table. The execution model 604 also is responsive to the index points to sequence through the state table as dictated by the application behaviors encoded in the state table 606. In one presently preferred embodiment, as the execution model 604 steps through each state change in the state table, specified operands in the state changes are pushed onto an execution stack 608. A byte code interpreter 610 then retrieves these operands which, for non-limiting examples, can be values or additional function code. The byte-code interpreter 610 then implements the behaviors that were encoded in the state table 606, triggered by the index points 602, and directed by the execution model 604 to the execution stack 608.

FIGURE 6 does not show a clock or other synchronizing device, although it will be appreciated that some indication of passage of time, whether a frame number count, elapsed time, or other such indicator is desired to drive execution of the computer system. For stored programs and data, a system clock, reading of frame or other sequence numbers, or similar means can be used to drive execution of the system in a standalone or emulation environment. In a broadcast environment, time or frame indicators would be broadcast or a system clock suitably synchronized to a broadcast time or counter could be used to drive execution of the computer system.

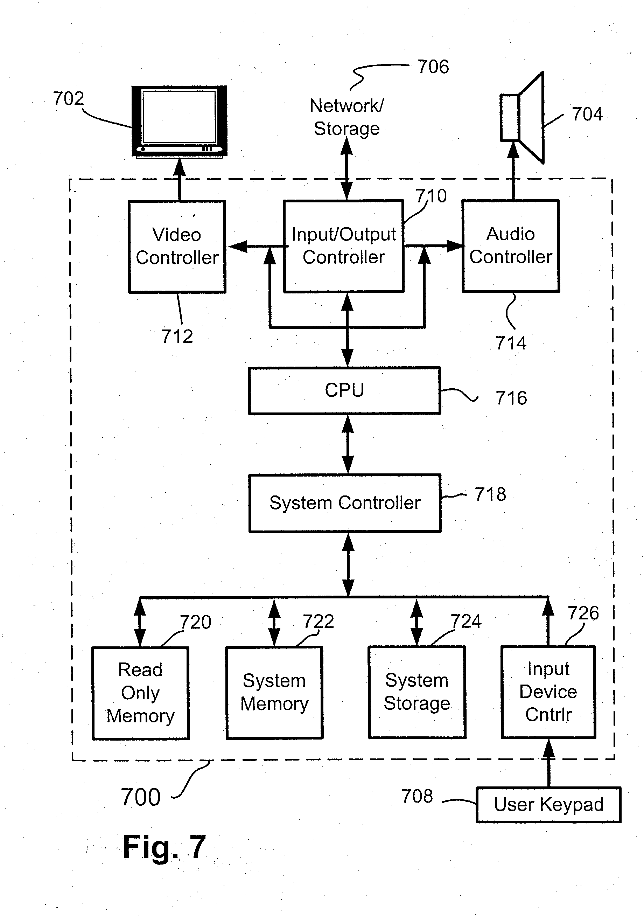

FIGURE 7 shows a computer system 700, which could be in the form of a media controller, STB, or emulator station operable for using embodiments of the present invention. The computer system 700 is operable for controlling a display 702, such as a television, and an audio subsystem 704, such as a stereo or a loudspeaker system. The computer system 700 receives input from a network or storage 706 in the case of the STB or the emulator station, respectively. The computer system 700 also receives user input from a wired or wireless user keypad 708, which may be in the nature of a STB remote, a computer keyboard, or another input device.

The computer system 700 receives input via an input/output controller 710, which directs signals to and from a video controller 712, an audio controller 714, and a central processing unit (CPU) 716. In the case of a STB, the input/output controller 710 suitably is a multiplexer for routing video data blocks received to a video controller 712 in the nature of a video decoder, audio data blocks to an audio controller 714 in the nature of an audio decoder, and for routing other data blocks to a CPU 716 for processing. In turn, the CPU 716 communicates through a system controller 718 with input and storage devices such as read only memory (ROM) 720, system memory 722, system storage 724, and input device controller 726.

The computer system 700 shown in FIGURE 7 thus can receive state changes collected in state tables and index points collected in index tables and pass them through the input/output controller 710 to the CPU 716 where they will be processed through the system controller 718, suitably in response to user input gathered through the user keypad 708 and the input device controller 726. The state changes collected in the table can then be executed and/or modified as triggered by the index points in the index table as previously described in connection with the foregoing example, method flowcharts, block diagrams, and co-pending patent applications incorporated by reference. User input or emulated user input can be returned by the input device controller 726 through the system controller 718 to the CPU 716 for processing. In turn, the CPU 716 transmits the information through the input/output controller 710 to the network or storage 706 as appropriate.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A method for controlling computer system operation during execution of the computer system, the method comprising:
identifying at least one attribute change of a computer system to occur during execution of the computer system;
associating the attribute change with a state change in the computer system such that indication of the state change triggers the attribute change;
identifying an index point in the execution of the computer system indicative of when the state change is to occur;
associating the index point in the computer system with the state change; and
triggering the state change in the computer system upon reaching the index point associated with the state change, such that the attribute is changed automatically upon the index point being reached.

2. The method of claim 1, wherein each of the index points associated with the state changes is collected in an index table.

3. The method of claim 2, wherein the index table includes a first column listing the index points and a second column listing the associated state changes.

4. The method of claim 2 or 3, wherein the index table is ordered by sequential occurrence of the index points.

5. The method of any one of the preceding claims, wherein state changes for attribute changes are collected in a state table, the state table listing the attribute changes along a first dimension of the state table and the state changes along a second dimension of the state table such that as each current state change is reached, each attribute change associated with the current state change is triggered.

6. The method of claim 5, wherein the index table and the state table are revisable independently of each other such that changing one of the index table or the state table does not necessitate changing both the index table and the state table.

7. The method of claim 5 or 6, further comprising one of sequentially loading or separately loading the index table and its associated state table from a data stream received by the computer system.

8. The method of any one of the preceding claims, wherein the execution of the computer system is based on a sequence of state changes and index points received from a broadcast network.

9. The method of claim 8, wherein the sequence of state changes and the index points are received from the broadcast network and stored for subsequent execution.

10. The method of any one of the preceding claims, wherein the execution of the computer system is based on a sequence of state changes and index points stored on the computer system.

11. The method of claim 10, wherein the sequence of state changes and index points is revisable for controlling the execution of the computer system during the actual passage of time.

12. The method of any one of the preceding claims, wherein passage of time for controlling the execution of the computer system is emulated and is manipulable for emulating actual execution of the computer system during actual passage of time.

13. The method of claim 12, wherein parameters for emulating actual execution of the computer system are monitorable.

14. The method of claim 13, wherein the parameters include execution running time.

15. The method of claim 13 or 14, wherein the parameters include memory usage.

16. A computer readable medium for controlling computer system operation during execution of the computer system, the computer readable medium comprising computer program code means for carrying out the method defined in any one of claims 1 to 15.

17. A system for controlling computer system operation during execution of the computer system, the system comprising:
a user interface including:
a first component configured to identify at least one attribute change of a computer system to occur during execution of the computer system; and
a second component configured to associate the attribute change with a state change in the computer system such that indication of the state change triggers the attribute change; and
a processor including:
a third component configured to identify an index point in the execution of the computer system indicative of when the state change is to occur;
a fourth component configured to associate the fourth index point with the state change; and
a fifth component configured to trigger the state change in the computer system upon reaching the index point associated with the state change, such that the attribute is changed automatically upon the index point being reached.

18. The system of claim 17, wherein the processor further includes a sixth component configured to collect in an index table each of the index points associated with the state changes.

19. The system of claim 18, wherein the sixth component is further configured to generate the index table with a first column listing the index points and a second column listing the associated state changes.

20. The system of claim 18 or 19, wherein the sixth component is further configured to order the index table by sequential occurrence of the index points.

21. The system of any one of claims 18 to 20, wherein the processor further includes a seventh component configured to collect in a state table state changes associated with the attribute changes, the state table listing the attribute changes along a first dimension of the state table and the state changes along a second dimension of the state table such that as each current state change is reached, each attribute change associated with the current state change is triggered.

22. The system of claim 21, wherein the processor further includes an eighth component configured to independently revise the index table and the state table such that changing one of the index table or the state table does not necessitate changing both the index table and the state table.

23. The system of claim 21 or 22, wherein the processor further includes a ninth component configured to perform one of sequentially loading or separately loading the index table and its. associated state table from a data stream received by the computer system.

24. The system of any one of claims 17 to 23, wherein the processor further includes a tenth component configured to receive the sequence of state changes and index points from a broadcast network.

25. The system of claim 24, wherein the tenth component is further configured to store the sequence of state changes and the index points for subsequent execution.

26. The system of any one of claims 17 to 25, wherein the processor further includes an eleventh component configured to control execution of the computer system based on a sequence of state changes and index points stored on the computer system.

27. The system of claim 26, wherein the processor further includes a fourteenth component configured to revise the sequence of state changes and index points to modify execution of the computer system during actual passage of time.

28. The system of any one of claims 17 to 27, wherein the processor further includes a twelfth component configured to emulate passage of time and to manipulate the passage of time thereby allowing for emulating actual execution of the computer system during actual passage of time.

29. The system of claim 28, wherein the processor further includes a thirteenth component configured to monitor parameters for emulating of the actual execution computer system.

30. The system of claim 29, wherein the parameters include execution running time.

31. The system of claim 29 or 30, wherein the parameters include memory usage.

32. A method for controlling execution of a computer system during presentation of a media program, the method comprising:
receiving a media program including at least one of video content and audio content;
receiving related data correlated with the media program for controlling computer system execution during presentation of the media program;
identifying in the related data an attribute change to occur during presentation of the media program;
identifying in the related data an index point associated with the attribute change for triggering the attribute change upon detecting occurrence of the initiating event during presentation of the media program;
presenting the media program; and
detecting the initiating event associated with the index point and triggering the attribute change associated with the index point.

33. A computer readable medium for controlling execution of a computer system during presentation of a media program, the computer readable medium comprising:
first computer program code means for receiving a media program including at least one of video content and audio content;
second computer program code means for receiving related data correlated with the media program for controlling computer system execution during presentation of the media program;
third computer program code means for identifying in the related data an attribute change to occur during presentation of the media program;
fourth computer program code means for identifying in the related data an index point associated with the attribute change for triggering the attribute change upon detecting occurrence of the initiating event during presentation of the media program;
fifth presenting the media program;
detecting the initiating event associated with the index point and triggering the attribute change associated with the index point.

34. A system for controlling execution of a computer system during presentation of a media program, the system comprising:
a receiver including:
a first component configured to receive a media program including at least one of video content and audio content; and
a second component configured to receive related data correlated with the media program for controlling computer system execution during presentation of the media program; and
a processor including:
a third component configured to identify in the related data an attribute change to occur during presentation of the media program;
a fourth component configured to identify in the related data an index point associated with the attribute change for triggering the attribute change upon detecting occurrence of the initiating event during presentation of the media program;
a fifth component configured to present the media program; and
a sixth component configured to detect the initiating event associated with the index point and trigger the attribute change associated with the index point.

35. A method for emulating execution of a computer system during presentation of a media program, the method comprising:
loading a media program including at least one of video content and audio content;
loading related data correlated with the media program for controlling computer system execution during presentation of the media program;
identifying in the related data an attribute change to occur during presentation of the media program;
identifying in the related data an index point associated with the attribute change for triggering the attribute change upon detecting occurrence of the initiating event during presentation of the media program;
emulating presenting the media program; and
detecting the initiating event associated with the index point and triggering the attribute change associated with the index point.

36. A computer readable medium for emulating execution of a computer system during presentation of a media program, the computer readable medium comprising:
first computer program code means for loading a media program including at least one of video content and audio content;
second computer program code means for loading related data correlated with the media program for controlling computer system execution during presentation of the media program;
third computer program code means for identifying in the related data an attribute change to occur during presentation of the media program;
fourth computer program code means for identifying in the related data an index point associated with the attribute change for triggering the attribute change upon detecting occurrence of the initiating event during presentation of the media program;
fifth emulating presenting the media program; and
detecting the initiating event associated with the index point and triggering the attribute change associated with the index point.

37. A system for emulating execution of a computer system during presentation of a media program, the system comprising:
a receiver including:
a first component configured to load a media program including at least one of video content and audio content; and
a second component configured to load related data correlated with the media program for controlling computer system execution during presentation of the media program; and
a processor including:
a third component configured to identify in the related data an attribute change to occur during presentation of the media program;
a fourth component configured to identify in the related data an index point associated with the attribute change for triggering the attribute change upon detecting occurrence of the initiating event during presentation of the media program;
a fifth component configured to emulate presentation of the media program; and
a sixth component configured to detect the initiating event associated with the index point and trigger the attribute change associated with the index point.

38. A computer loaded with the computer program code defined in any one of claims 16, 33 or 36.
